(19) **Europäisches Patentamt**

**European Patent Office**

**Office européen des brevets**

(11) **EP 0 643 988 B1**

(12) **EUROPEAN PATENT SPECIFICATION**

(45) Date of publication and mention
of the grant of the patent:
**04.06.1997 Bulletin 1997/23**

(51) Int. Cl.$^6$: **B01D 53/56**, B01D 53/86,
B01D 53/94, B01J 21/18,
B01J 20/20

(21) Application number: **94306521.9**

(22) Date of filing: **05.09.1994**

(54) **Process for decomposing nitrogen oxides**

Verfahren zur Zersetzung von Stickstoffoxiden

Procédé pour la décomposition d'oxydes d'azote

(84) Designated Contracting States:
**CH DE FR GB IT LI**

(30) Priority: **16.09.1993 US 122268**

(43) Date of publication of application:
**22.03.1995 Bulletin 1995/12**

(73) Proprietor: **ROHM AND HAAS COMPANY**
**Philadelphia, Pennsylvania 19106-2399 (US)**

(72) Inventors:
• **Brendley Jnr, William Harry**
**Hatboro, Pennsylvania 19040 (US)**

• **Drago, Russell Stephen**
**Gainesville, Florida 32605 (US)**

(74) Representative: **Tanner, James Percival et al**
**ROHM AND HAAS (UK) LTD.**
**European Operations Patent Department**
**Lennig House**
**2 Mason's Avenue**
**Croydon CR9 3NB (GB)**

(56) References cited:
**EP-A- 0 077 424**        **EP-A- 0 525 974**
**DE-A- 3 727 643**        **DE-A- 3 832 635**
**US-A- 4 040 990**

## Description

The present invention is concerned with the decomposition of nitrogen oxides and their catalytic reduction to nitrogen.

Nitrogen oxides are a series of gases having the general formula $NO_x$, and include nitric oxide (NO), nitrogen dioxide ($NO_2$), and various complex oxides such as nitrogen tetroxide. These reactive gases form in varying amounts during virtually all combustion of fuel in the presence of air, and particularly during high-temperature combustion. The combustion that occurs in internal combustion engines, incinerators, coal or oil fired power plants and the like is a significant source. Other sources are industrial, such as processes for making nitric acid or for forming nitrates or nitro groups. Nitrogen oxides are highly reactive, and through reactions with hydrocarbons and the like form a complex variety of air pollutants referred to as photochemical oxidants. Thus, reduction or elimination of nitrogen oxide emission into the atmosphere is an important aspect of air pollution control.

Typical reactions involved in the decomposition of nitrogen oxides are exemplified by the following reactions, in which the nitrogen oxides are represented by nitric oxide:

(a) decomposition of nitric oxide directly to nitrogen and oxygen.

$$2\,NO \rightarrow N_2 + O_2$$

(b) reduction of nitric oxide in the presence of a reducing agent but in the absence of oxygen.

$$4\,NO + CH_4 \rightarrow 2\,N_2 + CO_2 + 2\,H_2O$$

(c) reduction of nitric oxide in the presence of a reducing agent and oxygen.

$$2\,NO + CH_4 + O_2 \rightarrow N_2 + CO_2 + 2\,H_2O$$

These reactions are catalyzed in the prior art by precious-metal catalysts, for example, platinum. These catalysts are rare and expensive, given the widespread need for pollution control through $NO_x$ decomposition. To encourage a more widespread use of nitrogen-oxide-decomposition technology, with its resulting benefits to air quality, a decomposition catalyst which uses smaller amounts of metals, or uses less expensive metals, would be particularly advantageous. A further advantage would be realized by providing a catalyst that would maximize conversion to nitrogen and minimize formation of $N_2O$.

The DE-A-3 727 643 describes a process for decomposition of $NO_x$ with an carbonaceous adsorbent containing first row transition metal oxides.

According to the present invention there is provided a process for low-temperature decomposition of nitrogen oxides, which comprises contacting one or more nitrogen oxide, at a temperature of from 100°C to 450°C, with one or more metal oxide selected from first-row transition metal oxides, silver oxide and lanthanide oxides, supported on a carbonaceous adsorbent having a multimodal pore-size distribution and macropores ranging from $5 \times 10^{-9}$ to $1 \times 10^{-5}$m (50 to 100,000 Angstrom units) in average critical dimension.

Typically, in the process of the present invention metal-doped carbonaceous adsorbents are used as catalysts for decomposing nitrogen oxides to nitrogen and oxygen, and for reducing nitrogen oxides to nitrogen in reactions with reducing agents such as carbon monoxide or hydrocarbons.

In one embodiment of the present invention the carbonaceous adsorbent is made by partial pyrolysis of a macroporous synthetic polymer.

The supports, useful in the process of the present invention, may be made by partially pyrolyzing synthetic, macroporous copolymer particles containing macropores ranging from $5 \times 10^{-9}$ to $1 \times 10^{-5}$m (50 to 100.000 Angstrom units) in average critical dimension. The supports preferably have at least 85% by weight carbon and a carbon-to-hydrogen atom ratio of from 1.5:1 to 20:1. More preferred supports are those prepared by partial pyrolysis of synthetic polymer particles in the presence of one or more sulfonic acid groups or salts thereof as a carbon-fixing moiety.

The supports, useful in the process of the present invention, may be prepared by methods known to those skilled in the art, such as that described in Neely, US-A-4,040,990, or Maroldo et al., US-A-4,839,331. These methods involve partial pyrolysis of synthetic copolymer particles until they have at least 85% by weight carbon and a carbon-to-hydrogen atom ratio of from 1.5:1 to 20:1.

The metal dopants useful in the process of the present invention are first-row transition metal oxides, silver oxide and lanthanide metal oxides. The first-row transition metals are scandium (Sc), titanium (Ti), vanadium (V), chromium (Cr), manganese (Mn), iron (Fe), cobalt (Co), nickel (Ni), copper (Cu) and zinc (Zn), and the lanthanide metals are cerium (Ce), praeseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb) and lutetium (Lu). The preferred metal dopants depend upon the particular nitrogen oxide reaction to be catalyzed: for decomposition of nitrogen oxides to $N_2$ and $O_2$, and the reduction of nitrogen oxides to $N_2$ in the absence of oxygen (reactions "a" and "b" above), the preferred metal dopant(s) is/are selected from cerium oxides, copper oxides and mixed cerium and copper oxides, and more preferably is/are selected from cerium oxides and mixed cerium and copper oxides, while for the reduction of nitrogen oxides to $N_2$ in the presence of oxygen (reaction "c" above), the preferred metal dopant(s) is/are selected from cobalt and manganese oxides.

One method of introducing a metal dopant to the adsorbent is to adsorb an aqueous solution of a salt of the metal dopant onto the adsorbent, evaporate the water, and heat the adsorbent to a temperature high enough to decompose the dopant metal salt to the dopant metal oxide. Nitrate salts are advantageously used in this method, and the decomposition temperature is selected high enough to decompose the nitrate to the oxide, but not so high as to cause significant decomposition of the adsorbent. The decomposition preferably is carried out in an inert atmosphere, for example, in a nitrogen atmosphere. Under those conditions, the temperature selected is preferably from about 250°C to about 450°C, and more preferably from about 300°C to about 400°C. At the higher temperatures, the decomposition time is preferably limited to limit the amount of adsorbent decomposition; this is not normally a problem at temperatures below about 375°C in inert atmospheres. Other salts of the dopant metals will readily be apparent to those skilled in the art, as will other methods of introducing the metal dopants to the adsorbent.

The maximum amount of metal dopant(s) on the supports which the present invention contemplates is that amount which would completely fill the micropore volume of the support. One having ordinary skill in the art would thus readily understand the maximum amount of metal dopant(s), that could be applied to the support, from the volume and density of the metal oxides. A preferred range of weights of the metal oxide(s) on the support is from 1.5 mg/g to 30 mg/g. At levels significantly below 1.5 mg/g, one may not be able to distinguish the catalytic activity of the metal(s) from that of the carbonaceous support.

Although the catalytic decomposition of nitrogen oxides according to the present invention will occur in the absence of a reducing agent, a preferred embodiment of the invention is to carry out the decomposition in the presence of a stoichiometric excess of a gaseous reducing agent. The gaseous reducing agents useful in the process of the present invention are gases at the temperature used to contact the nitrogen oxide(s) with the metal-doped adsorbent. They include: hydrocarbons, for example, linear and branched aliphatic hydrocarbons such as methane, ethane, ethylene, propanes, propylenes, hexanes, hexenes, cyclohexanes, octanes, octenes, cyclooctanes and the like, and substituted or unsubstituted aromatic hydrocarbons such as benzene, toluene, xylenes, naphthalenes and the like; and carbon monoxide. Preferred hydrocarbon reducing agents are those having relatively low mammalian toxicity.

The process of the present invention comprises contacting one or more nitrogen oxides, e.g. a gas containing one or more nitrogen oxide, with the metal-doped carbonaceous adsorbent at a temperature of from 100°C to 450°C, preferably from 120°C to 200°C, and preferably in the presence of a gaseous reducing agent.

It is believed that one of the contributing factors in the high conversion to nitrogen, and the corresponding low levels of $N_2O$ produced, is a decomposition of $N_2O$ to nitrogen by the process of the present invention.

The following Examples are presented to illustrate various embodiments of the present invention. All reagents used are of good commercial quality unless otherwise indicated, and all percentages and ratios given herein are by weight unless otherwise indicated.

The adsorbent supports labelled "R" used in the following Examples were prepared according to Maroldo et al., US-A-4,839,331. Beads of macroporous styrene-divinylbenzene copolymer were sulfonated by heating them in oleum, partially pyrolyzing the resulting beads at 800°C, and treating the beads with steam at 800°C, to prepare a macroporous adsorbent having a microporosity of about 0.490 $cm^3$/g, a mesoporosity of about 0.135 $cm^3$/g, and a macroporosity of about 0.307 $cm^3$/g. The particle diameter of the adsorbent support R, by sieve analysis, is from about 150 μm to about 355 μm.

The adsorbent supports labeled "K" were prepared by partial pyrolysis of beads of pitch; the supports had a typical microporosity of about 0.570 $cm^3$/g, a mesoporosity of about 0.021 $cm^3$/g, and a macroporosity of about 0.009 $cm^3$/g. The size of the adsorbent support K, by sieve analysis, is from about 212 μm to about 500 μm.

The charcoal adsorbent support used was Baker food-grade, powdered, activated charcoal.

EXAMPLE 1

This Example illustrates the process of the present invention through the reduction of nitrogen oxides by a carbonaceous adsorbent doped with copper oxide and cerium oxide in the presence of hexane.

Aqueous solutions of copper nitrate $(Cu(NO_3)_2 \cdot 6H_2O)$ and cerium ammonium nitrate $((NH_4)_2Ce(NO_3)_6)$ were prepared, and a 2.0-g sample of adsorbent "R" was mixed with amounts of the solutions containing 0.10 g copper calculated as CuO and 0.02 g cerium calculated as $CeO_2$. The adsorbent sample was dried overnight in a vacuum at 180°C, then distributed over about 12 cm of a horizontal, 10-mm-diameter, Pyrex reaction tube and covered with glass beads. A flow of nitrogen gas was established, and the adsorbent sample was heated to 350°C and held at that temperature for 12 hours. The temperature of the adsorbent was decreased to 200°C and a flow of nitrogen gas, saturated with hexane vapor by bubbling it through hexane at room temperature, was established through the reaction tube at 2.0 ml/min. The hexane content of the nitrogen gas was approximately 10,000 parts per million (ppm) for the first 60 hours. Nitric oxide (NO), at a level of 15,000 ppm, was introduced to the nitrogen gas passing through the reaction tube, and the gas exiting from the reaction tube was analyzed by gas chromatography to determine its composition. After six hours, about 46% of the NO was being converted to nitrogen, and about 5% of the NO was converted to $N_2O$. After 32 hours, about 35% of the NO was being converted to nitrogen, and about 5% to $N_2O$, and after 60 hours, about 35% of the NO was being converted to nitrogen and about 8% to $N_2O$.

After 60 hours, the nitrogen feed was replaced with an air feed carrying approximately the same concentration of hexane (10,000 ppm). The NO level was reduced to about 2500 - 3000 ppm. After an additional 60 hours, 90% of the NO in the air was being converted to nitrogen, and about 10% to $N_2O$. Under these conditions, more than 99% of the hexane was also being converted to carbon dioxide.

The temperature of the reactor was reduced to 170°C and maintained, and the air feed carrying NO and hexane was continued at the same levels for 25 more hours. Under these conditions 85% of the NO was being converted to nitrogen, and 15% to $N_2O$. Conversion of hexane to carbon dioxide remained at 99%.

The temperature was again reduced, to 140°C and maintained for 40 hours; 80% of the NO was converted to nitrogen and 20% to $N_2O$; conversion of hexane to carbon dioxide decreased to 75%.

The temperature was reduced to 130°C and maintained for 20 hours; no NO was observed in the exiting gas, but the level of $N_2O$ increased to about 25% and the level of unreacted hexane increased to about 30%.

The temperature was reduced to 120°C and maintained for 20 hours. The level of unreduced NO rose to 40%, with 35% being reduced to $N_2O$ and 25% to nitrogen.

At this point the temperature was increased to 165°C and maintained for 20 hours. During the first few hours reactants were observed to desorb from the adsorbent, but after 20 hours 82% of the NO was being reduced to nitrogen and 18% to $N_2O$.

EXAMPLE 2

This Example illustrates the process of the present invention through the reduction of nitric oxide by a carbonaceous adsorbent doped with copper and cerium in the presence of carbon monoxide.

The metal-doped adsorbent catalyst was prepared and activated as in Example 1, and the reaction apparatus was as described in Example 1. In place of the hexane, carbon monoxide was mixed with the 2-ml/minute nitrogen flow entering the reaction tube at a level of about 100,000 ppm, and NO was added to the entering gas at a level of 20,000 to 30,000 ppm. The temperature was held at 180°C for six hours, then lowered to 160°C and maintained for 50 hours. During this time 85% of the NO was being reduced to nitrogen, and 15% to $N_2O$. The temperature was lowered to 140°C and maintained for 20 hours; 27% of the NO was being reduced to nitrogen and about 40% to $N_2O$, and adsorption of the reagents onto the adsorbent catalyst was observed. The temperature was increased to 185°C and maintained for 100 hours; 99% of the NO was being reduced to nitrogen and 1% to $N_2O$.

EXAMPLE 3

This Example illustrates the process of the present invention through the reduction of nitric oxide by a carbonaceous adsorbent doped with copper oxide and cerium oxide in the presence of hexane. The cerium doping level was higher in this Example.

A 2.0-gram sample of adsorbent "R" was doped with 5% CuO and 5% $CeO_2$ and activated, as described in Example 1. The apparatus was essentially the same as that described in Example 1. A flow of air, carrying 7,000 to 10,000 ppm NO and 10,000 ppm hexane, was established at 1.0 ml/minute through the reaction tube. The tube was heated to 170°C and maintained for 25 hours; during this time 87.6% of the NO was being reduced to nitrogen and 12.4% to $N_2O$. The temperature was lowered to 160°C and maintained for 50 hours; 92% of the NO was being reduced to nitrogen and 8% to $N_2O$. During the first 50 hours almost 100% of the hexane was converted to $CO_2$, and after 75 hours about 83% of the hexane was converted to $CO_2$.

At the end of the 75th hour, the temperature was raised to 180°C and maintained for 45 hours; about 93% of the NO was being reduced to nitrogen, about 7% to $N_2O$, and about 50% of the hexane was being converted to $CO_2$. At the lower temperatures, adsorption of reactants by the adsorbent catalyst was again observed.

EXAMPLE 4

This Example illustrates the process of the present invention through reduction of nitric oxide on a different, doped adsorbent catalyst, where the dopant was copper oxide and cerium oxide, in the presence of hexane.

A 2.0-gram sample of adsorbent "K" was doped with 5% CuO and 1% $CeO_2$ as described for the adsorbent in Example 1. The apparatus used was essentially the same as that used in Example 1. A flow of air carrying 20,000 ppm NO and 10,000 ppm hexane was established at 1 ml/minute. After 50 hours at 180°C, 94.6% of the NO was being reduced to nitrogen, and 5.4% to $N_2O$. The temperature was raised to 190°C and maintained for 20 hours; 96.2% of the NO was converted to nitrogen and 3.8% to $N_2O$. Conversion of hexane to carbon dioxide was 100% for the first 25 hours, 91% at the end of the 180°C period (50 hours), and 76% at the end of the 190°C period.

EXAMPLE 5

This Example illustrates the process of the present invention through reduction of nitric oxide on an adsorbent catalyst doped with copper oxide alone, in the presence of carbon monoxide.

A 2.0-g sample of adsorbent "R" was doped with 5% CuO as described in Example 1. The apparatus used was essentially the same as that used in Example 1. Nitrogen at 1 ml/minute carried about 40,000 ppm NO and about 170,000 ppm CO. After 50 hours at 180°C, 79% of the NO was reduced to nitrogen and 21% to $N_2O$; 54% of the CO was oxidized to $CO_2$.

EXAMPLE 6

This Example illustrates the process of the present invention through reduction of nitric oxide on an adsorbent catalyst doped with cerium oxide alone, in the presence of hexane.

A 2.0-g sample of adsorbent "R" was doped with 5% $CeO_2$ as described in Example 1. The apparatus used was essentially the same as that used in Example 1. Nitrogen at 1 ml/minute carried about 30,000 ppm NO and about 7,000 ppm hexane. After 50 hours at 180°C, 42% of the NO was reduced to nitrogen and 5.9% to $N_2O$; the hexane was converted completely to CO and $CO_2$.

EXAMPLE 7

This Example illustrates the process of the present invention through reduction of nitric oxide on an adsorbent doped with copper oxide alone, in the absence of a gaseous reducing agent.

A 2.0-g sample of adsorbent "R" was doped with 5% CuO as described in Example 1. The apparatus used was essentially the same as that used in Example 1. Nitrogen at 1.5 ml/minute carried about 45,000 ppm NO. After 25 hours at 180°C, 36.5% of the NO was reduced to nitrogen and 14.5% to $N_2O$. No catalyst weight loss was observed during this reaction.

EXAMPLE 8

This Example illustrates the process of the present invention through reduction of nitric oxide on an adsorbent doped with cerium oxide alone, in the absence of a gaseous reducing agent.

A 2.0-g sample of adsorbent "R" was doped with 5% $CeO_2$ as described in Example 1. The apparatus used was essentially the same as that used in Example 1. Nitrogen at 1.5 ml/minute carried about 10,000 ppm NO. After 25 hours at 180°C, about 93% of the NO was reduced to nitrogen and about 3.8% to $N_2O$. No catalyst weight loss was observed during this reaction.

EXAMPLE 9

This Example illustrates the process of the present invention through reduction of nitric oxide on an adsorbent doped with nickel, in the presence of carbon monoxide.

A 2.0-g sample of adsorbent "R" was doped with 5% NiO as described in Example 1; aqueous nickel nitrate solution was used to dope the adsorbent. The apparatus used was essentially the same as that used in Example 1. Nitrogen at 1 ml/minute carried about 30,000 ppm NO and about 200,000 ppm CO. After 50 hours at 190°C, 22% of the NO was reduced to nitrogen and 70% to $N_2O$.

EXAMPLE 10

This Example illustrates the process of the present invention through reduction of nitric oxide on an adsorbent doped with manganese, in the presence of hexane.

A 2.0-g sample of adsorbent "R" was doped with 5% MnO as described in Example 1; aqueous manganese nitrate solution was used to dope the adsorbent. The apparatus used was essentially the same as that used in Example 1. Air at 1 ml/minute carried about 15,000 ppm NO and about 10,000 ppm hexane. After 25 hours at 180°C, 93.6% of the NO was reduced to nitrogen and 6.4% to $N_2O$. Conversion of hexane to carbon dioxide exceeded 99.9%. After an additional 50 hours at 190°C, 91.4% of the NO was reduced to nitrogen and 8.6% to $N_2O$. Conversion of hexane to CO and $CO_2$ was about 99.8%.

EXAMPLE 11

This Example illustrates the process of the present invention through reduction of nitric oxide on an adsorbent doped with silver, in the presence of carbon monoxide.

A 2.0-g sample of adsorbent "R" was doped with 5% $Ag_2O$ as described in Example 1; aqueous silver nitrate solution was used to dope the adsorbent. The apparatus used was essentially the same as that used in Example 1. Nitrogen at 1 ml/minute carried about 10,000 ppm NO and about 100,000 ppm CO. After 25 hours at 180°C, 25.9% of the NO was reduced to nitrogen and only traces of $N_2O$ were observed.

EXAMPLE 12

This Example illustrates the process of the present invention through reduction of nitric oxide on an adsorbent doped with cobalt, in the presence of hexane.

A 2.0-g sample of adsorbent "R" was doped with 5% CoO as described in Example 1; aqueous cobalt nitrate solution was used to dope the adsorbent. The apparatus used was essentially the same as that used in Example 1. Air at 1 ml/minute carried about 15,000 ppm NO and about 10,000 ppm hexane. After 25 hours at 180°C, 93% of the NO was reduced to nitrogen and 7% to $N_2O$. Conversion of hexane to carbon dioxide exceeded 99.9%. At 50 hours at 180°C, 93.7% of the NO was reduced to nitrogen and 6.3% to $N_2O$. Conversion of hexane to CO and $CO_2$ exceeded 99.9%.

**Claims**

1. A process for low-temperature decomposition of nitrogen oxides, which comprises contacting one or more nitrogen oxide, at a temperature of from 100°C to 450°C with one or more metal oxide selected from first-row transition metal oxides, silver oxide and lanthanide oxides, supported on a carbonaceous adsorbent having a multimodal pore-size distribution and macropores ranging from $5 \times 10^{-9}$ to $1 \times 10^{-5}$m (50 to 100,000 Angstrom units) in average critical dimension.

2. A process as claimed in claim 1, wherein the carbonaceous adsorbent is made by partial pyrolysis of a macroporous synthetic polymer.

3. A process as claimed in claim 1 or claim 2, wherein the nitrogen oxide(s) is/are contacted with the metal oxide(s) in the presence of a stoichiometric excess of a gaseous reducing agent, preferably a hydrocarbon or carbon monoxide.

4. A process as claimed in any preceding claim, wherein the temperature at which the nitrogen oxide(s) contact(s) the metal oxide(s) is from 120°C to 200°C.

5. A process as claimed in any preceding claim, wherein the process is carried out in the absence of oxygen.

6. A process as claimed in claim 5, wherein the metal oxide(s) is/are selected from oxides of cerium, oxides of copper and mixed oxides of cerium and copper.

7. A process as claimed in any of claims 1 to 4, wherein the process is carried out in the presence of oxygen.

8. A process as claimed in claim 7, wherein the metal oxide(s) is/are selected from cobalt and manganese oxides.

9. A process as claimed in any preceding claim, wherein said one or more metal oxide is present on the carbonaceous adsorbent at from 1.5 to 30 milligrams per gram of adsorbent.

**Patentansprüche**

1. Verfahren zur Niedertemperaturzersetzung von Stickstoffoxiden, welches das Kontaktieren eines oder mehrerer Stickstoffoxide bei einer Temperatur von 100°C bis 450°C mit einem oder mehreren Metalloxiden, ausgewählt aus Metalloxiden der ersten Übergangsreihe, Silberoxid und Lanthanoidoxiden, gestützt auf einem kohlenstoffhaltigen Adsorbens mit einer multimodalen Porengrößenverteilung und Makroporen im Bereich von $5 \times 10^{-9}$ bis $1 \times 10^{-5}$m (50 bis 100000 Ångström-Einheiten) hinsichtlich der durchschnittlichen, kritischen Dimension, umfaßt.

2. Verfahren nach Anspruch 1, bei dem das kohlenstoffhaltige Adsorbens durch partielle Pyrolyse eines makroporösen, synthetischen Polymers hergestellt wird.

3. Verfahren nach Anspruch 1 oder 2, bei dem das (die) Stickstoffoxid(e) in Kontakt mit dem (den) Metalloxid(en) in Gegenwart eines stöchiometrischen Überschusses eines gasförmigen, reduzierenden Mittels, bevorzugt ein Kohlenwasserstoff oder Kohlenmonoxid, ist (sind).

4. Verfahren nach einem vorhergehenden Anspruch, bei dem die Temperatur, bei welcher das (die) Stickstoffoxid(e) das (die) Metalloxid(e) kontaktiert (kontaktieren), von 120°C bis 200°C reicht.

5. Verfahren nach einem vorhergehenden Anspruch, bei dem das Verfahren in Abwesenheit von Sauerstoff durchgeführt wird.

6. Verfahren nach Anspruch 5, bei dem das (die) Metalloxid(e) aus Oxiden von Cer, Oxiden von Kupfer und gemischten Oxiden von Cer und Kupfer ausgewählt ist (sind).

7. Verfahren nach einem der Ansprüche 1 bis 4, bei dem das Verfahren in Gegenwart von Sauerstoff durchgeführt wird.

8. Verfahren nach Anspruch 7, bei dem das (die) Metalloxid(e) aus Kobalt- und Manganoxiden ausgewählt ist (sind).

9. Verfahren nach einem vorhergehenden Anspruch, bei dem das eine oder die mehreren Metalloxid(e) auf dem kohlenstoffhaltigen Adsorbens von 1,5 bis 30 mg pro Gramm Adsorbens vorliegt (vorliegen).

**Revendications**

1. Procédé pour la décomposition à basse température d'oxydes d'azote, qui consiste à mettre en contact un ou plusieurs oxydes d'azote; à une température comprise entre 100°C et 450°C avec un ou plusieurs oxydes métalliques choisis parmi les oxydes des métaux de transition de la première rangée, l'oxyde d'argent et les oxydes de lanthanides, supportés sur un adsorbant carboné ayant une distribution de taille des pores multimodale et des macropores allant de $5 \times 10^{-9}$ à $1 \times 10^{-5}$ m (50 à 100 000 angstroems) en dimension critique moyenne.

2. Procédé selon la revendication 1, dans lequel l'adsorbant carboné est obtenu par pyrolyse partielle d'un polymère synthétique macroporeux.

3. Procédé selon la revendication 1 ou 2, dans lequel le ou les oxydes d'azote sont mis en contact avec le ou les oxydes métalliques en présence d'un excès stoechiométrique d'un agent de réduction gazeux, de préférence un hydrocarbure ou le monoxyde de carbone.

4. Procédé selon l'une quelconque des revendications précédentes, dans lequel la température à laquelle le ou les oxydes d'azote sont en contact avec le ou les oxydes métalliques est dans la plage de 120°C à 200°C.

5. Procédé selon l'une quelconque des revendications précédentes, dans lequel le procédé est effectué en l'absence d'oxygène.

6. Procédé selon la revendication 5, dans lequel le ou les oxydes métalliques sont choisis parmi les oxydes de cérium, les oxydes de cuivre et les oxydes mélangés de cérium et de cuivre.

7. Procédé selon l'une quelconque des revendications 1 à 4, dans lequel le procédé est effectué en présence d'oxygène.

8. Procédé selon la revendication 7, dans lequel le ou les oxydes métalliques sont choisis parmi les oxydes de cobalt et de manganèse.

9. Procédé selon l'une quelconque des revendications précédentes, dans lequel lesdits un ou plusieurs oxydes métalliques sont présents sur l'adsorbant carboné à raison de 1,5 à 30 milligrammes par gramme d'adsorbant.